# EUROPEAN PATENT APPLICATION

(11) **EP 4 753 034 A1**
(43) Date of publication of application: **03.06.2026**
(21) Application number: 24845570.1
(22) Date of filing: 19.07.2024
(51) Int. Cl.: H01M 50/121, B32B 15/082, B32B 27/30, B65D 65/40, H01M 10/0562, H01M 50/105, H01M 50/119, H01M 50/129, H01M 50/133, H01M 50/141

(54) **FILM FOR BATTERY EXTERIOR BODY, BATTERY EXTERIOR BODY, AND SECONDARY BATTERY**

(30) Priority: 24.07.2023 JP 2023120103; 15.11.2023 JP 2023194606; 06.03.2024 JP 2024034259
(71) Applicant: AGC Inc., Chiyoda-ku Tokyo 100-8405 (JP)
(72) Inventor: TAKENAKA, Satoshi, Tokyo 100-8405 (JP)
(74) Representative: Müller-Boré & Partner Patentanwälte PartG mbB
(86) International application number: PCT/JP2024/026053
(87) International publication number: WO 2025/023194

(57) **Abstract**

A film for a battery exterior body has a thickness of 10 µm or greater, including a heat-meltable tetrafluoroethylene-type polymer having 50 or more carbonyl group-containing groups per 10⁶ carbon atoms in its main chain and a fluorine content of from 60% by mass to 75% by mass.

## Description

### Technical Field

The present invention relates to a film for a battery exterior body, a battery exterior body, and a secondary battery.

### Background Art

It is known that a combination of a metal layer and a resin layer is used as an exterior body (battery exterior body) for batteries such as lithium-ion secondary batteries. For example, the exterior body is required to have heat resistance sufficient for mounting to a substrate using a reflow soldering process and water resistance sufficient to prevent the penetration of moisture such as water vapor.

Patent Document 1 discloses an exterior body made of a laminate film having a resin film layer containing a thermally adhesive resin with a melting point of 200°C or higher and a metal foil disposed within the resin film layer. It also discloses a solid-state battery equipped with the exterior body, in which at least a portion of the metal foil of the exterior body is exposed to form a contact portion with the positive or negative terminal, and another portion of the metal foil is exposed to form an extraction electrode portion.

On the other hand, as a heat-resistant resin layer to be combined with the metal layer, Patent Document 2 discloses a fluororesin film that has been subjected to corona discharge treatment or plasma discharge treatment and has an oxygen element ratio of not less than a predetermined amount when a surface state after heat treatment is measured by a scanning X-ray photoelectron spectrometer, and is said to have excellent adhesiveness to a copper foil.

### [Prior Art Documents]

### [Patent Documents]

| | |
|---|---|
| [Patent Document 1] | International Publication (WO) No. 2021/235451 |
| [Patent Document 2] | Japanese Patent Application Laid-Open (JP-A) No. 2022-112028 |

### SUMMARY OF INVENTION

Patent Document 1 mentions polychlorotrifluoroethylene, polytetrafluoroethylene, polyphenylene sulfide, and polyamideimide as resins that can be used to form the resin film layer. However, it is difficult for these resin films to achieve a balance between adhesiveness to the metal layer and physical properties required for a battery packaging material, such as chemical resistance, gas barrier properties, and slip properties of the surface of the resin film, and drawability.

The fluororesin film disclosed in Patent Document 2 exhibits adhesion to copper foil through surface modification using corona discharge treatment or plasma discharge treatment. However, surface modification of the fluororesin film using discharge treatment also involves decomposition of the fluororesin near the surface of the film. As a result, while initial adhesion to copper foil (lamination characteristics) tends to improve, the long-term durability of adhesion and the influence thereof on the physical properties required for the above-described battery packaging material, tend to become significant. That is, the relationship between the two is, so to speak, a trade-off relationship, and the present inventors have found that, when such a fluororesin film is applied to a battery member, the fluororesin film is liable to be significantly affected by environmental changes such as temperature changes associated with charging and discharging and gas generation from an electrolytic solution, an electrolyte and the like. Furthermore, since a fluororesin is liable to undergo linear expansion, the present inventors have found that the influence on physical properties becomes more significant also as the fluororesin film becomes thicker.

The present inventors have found that, when in applying a fluororesin film to a battery exterior body, a film having a specified thickness and using a fluororesin that itself contains a specified amount or more of specific functional groups and has a fluorine content within a specified range exhibits excellent in chemical resistance and heat resistance, has good adhesiveness to a metal layer, and is also excellent in moldability, such as slip properties and drawability of the film surface, and thus can be applied to a variety of battery exterior bodies.

An object of the present invention is to provide a film for a battery exterior body, which can form a battery exterior member excellent in chemical resistance, gas barrier properties, and the like, has good adhesiveness to a metal layer, and is excellent in moldability such as slip properties of the surface and drawability.

Another object of the present invention is to provide a battery exterior body including such a film for a battery exterior body, and a secondary battery having such a battery exterior body.

### Solution to Problem

The present invention has the following aspects.
<1> A film for a battery exterior body having a thickness of 10 µm or greater, including a heat-meltable tetrafluoroethylene-type polymer having 50 or more carbonyl group-containing groups per 10⁶ carbon atoms in its main chain and a fluorine content of from 60% by mass to 75% by mass.
<2> The film for a battery exterior body according to <1>, in which the heat-meltable tetrafluoroethylene-type polymer has an MFR of from 10 g/10 min to 60 g/10 min.
<3> The film for a battery exterior body according to <1>, in which the fluorine content is from 60% by mass to 68% by mass.
<4> The film for battery exterior body according to <1>, in which the heat-meltable tetrafluoroethylene-type polymer is a copolymer including a tetrafluoroethylene unit and an ethylene unit.
<5> The film for a battery exterior body according to any one of <1> to <4>, in which a number of the carbonyl group-containing groups in the heat-meltable tetrafluoroethylene-type polymer is 200 or more per 10⁶ carbon atoms in its main chain.
<6> The film for a battery exterior body according to any one of <1> to <5>, in which an oxygen element ratio is less than 1.5 atomic % when a surface condition of one or both sides of the film is measured using a scanning X-ray photoelectron spectroscopy analyzer (XPS/ESCA) after heat treatment at 180°C for 3 minutes.
<7> A battery exterior body including:
   a soft metal layer; and
   a layer of the film for a battery exterior body according to any one of <1> to <6>.
<8> The battery exterior body according to <7>, in which the layer of the film for a battery exterior body is thicker than the soft metal layer.
<9> The battery exterior body according to <7> or <8>, in which the soft metal is aluminum.
<10> The battery exterior body according to any one of <7> to <9>, including, in this order, the layer of the film for a battery exterior body, the soft metal layer, and the layer of the film for a battery exterior body.
<11> The battery exterior body according to any one of <7> to <10>, further including a resin film layer made of at least one resin selected from the group consisting of a polyethylene, a polypropylene, a polyimide, a polyamide, a liquid crystal polymer, a polyphenylene sulfide, a polyethylene terephthalate, a polybutylene terephthalate, a cycloolefin polymer, a polystyrene, an epoxy resin, a bismaleimide, a polyphenylene oxide, a polyphenylene ether, and a polybutadiene.
<12> The battery exterior body according to any one of <7> to <11>, further including a resin film layer made of a heat-meltable tetrafluoroethylene-type polymer having no carbonyl group-containing groups.
<13> The battery exterior body according to <11> or <12>, in which the layer of the film for a battery exterior body is in contact with one surface of the soft metal layer, and the resin film layer is in contact with another surface of the soft metal layer.
<14> The battery exterior body according to any one of <7> to <13>, in which an adhesive strength between the soft metal layer and the layer of the film for a battery exterior body is 100 N/m or greater.
<15> A secondary battery including:
   the battery exterior body according to any one <7> to <14>; and
   an electrolyte,
   in which the layer of the film for a battery exterior body is provided at a position that contacts the electrolyte when the battery is assembled.

### Advantageous Effects of Invention

The present invention provides a film for a battery exterior body, which can form a battery exterior member excellent in chemical resistance, gas barrier properties, and the like, has good adhesiveness to a metal layer, and is excellent in moldability such as slip properties of the surface and drawability; a battery exterior body; and a secondary battery having such a battery exterior body.

### BRIEF DESCRIPTION OF DRAWINGS

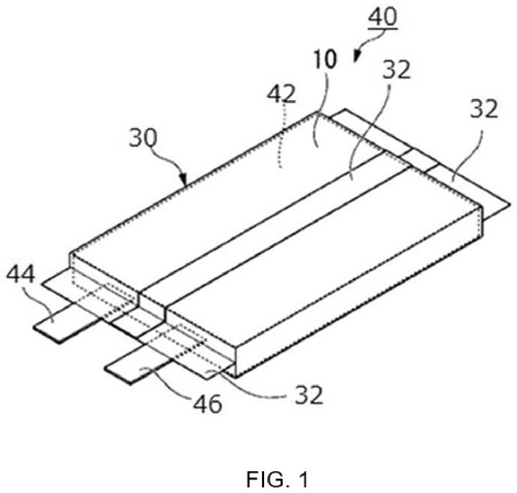

FIG. 1 is a perspective view showing an example of a battery exterior body having a film layer for a battery exterior body of the present invention.

### DESCRIPTION OF EMBODIMENTS

The following terms have the following meanings:
A "Melt flow rate (MFR) of a heat-meltable tetrafluoroethylene-type polymer" is a value measured at 372°C under a load of 5 kg in accordance with ASTM D3307.

A "Melting point of a polymer" is a temperature corresponding to a maximum value of a melting peak of the polymer measured by a differential scanning calorimetry (DSC).

A "glass transition temperature (Tg)" is a value measured by analyzing the polymer using a dynamic mechanical analysis (DMA) method.

Thicknesses of the film and the metal layer are an average of values obtained by measuring any five points at 25°C using a high-precision Digimatic micrometer "MDH-25MB" manufactured by Mitutoyo Corporation.

A "unit" in a polymer means an atomic group based on a monomer, formed by polymerization of that monomer. The unit may be a unit formed directly by the polymerization reaction, or may be a unit in which a portion of the unit is converted into another structure by processing the polymer. Hereinafter, a unit based on monomer a is also simply referred to as a "monomer a unit."

The present invention is a film for battery exterior body (hereinafter also referred to as "the present film for a battery exterior body") having a thickness of 10 µm or greater, including a heat-meltable tetrafluoroethylene-type polymer (hereinafter also referred to as "F polymer") having 50 or more carbonyl group-containing groups per 10⁶ carbon atoms in its main chain and a fluorine content of from 60% by mass to 75% by mass.

A surface of the present film for a battery exterior body has carbonyl group-containing groups derived from the molecular structure of the F polymer itself, which is thought to facilitate high levels of adhesiveness. Furthermore, it is considered that the fluorine content of the F polymer being within a predetermined range alleviates the surface tension, thereby improving affinity with other base materials, while maintaining chemical resistance and heat resistance of the present film for a battery exterior body. As a result, in a battery exterior body including a soft metal layer and the present film for a battery exterior body, which will be described later, it is considered that the present film for a battery exterior body has excellent adhesion to the soft metal layer as well as excellent barrier properties of a battery exterior body, excellent in moldability such as slip properties of the surface and drawability. These properties are more likely to be exhibited remarkably in preferred embodiments of the present film for a battery exterior body, which will be described later.

The F polymer in the present invention is a heat-meltable polymer containing a unit based on tetrafluoroethylene (hereinafter, also referred to as "TFE") (hereinafter, also referred to as a "TFE unit"). Here, a heat-meltable polymer means a polymer for which there is a temperature at which the melt flow rate is from 1 to 1,000 g/10 min under a load of 49 N.

The melting point of the F polymer is preferably higher than 100°C, more preferably 180°C or higher, and even more preferably 200°C or higher. The melting point of the F polymer is preferably 325°C or lower, and more preferably 320°C or lower. In this case, the present film for a battery exterior body tends to be excellent in heat resistance.

The glass transition temperature of the F polymer is preferably 50°C or higher, and more preferably 75°C or higher. The glass transition temperature of the F polymer is preferably 150°C or lower, and more preferably 125°C or lower.

The fluorine content of the F polymer is from 60% by mass to 75% by mass, and is preferably from 60% by mass to 68% by mass. In this case, the above-described mechanism of action is more likely to be exhibited. The fluorine content of the F polymer is determined as a proportion of fluorine atoms with respect to all monomer units constituting the F polymer.

The surface tension of F polymer is preferably from 16 to 26 mN/m. The surface tension of F polymer can be measured by placing a droplet of a mixed liquid for a wetting tension testing (manufactured by Wako Pure Chemical Industries, Ltd.) specified in JIS K 6768 on a flat plate produced from the F polymer.

Examples of the F polymer include a copolymer (ETFE);containing a TFE unit and a unit based on ethylene (ethylene unit); a copolymer containing a TFE unit and a unit based on propylene (propylene unit); a copolymer (PFA) containing a TFE unit and a unit based on perfluoro(alkyl vinyl ether) (PAVE) (PAVE unit); a copolymer (FEP) containing a TFE unit and a unit based on hexafluoropropylene (HFP) (HFP unit); a TFE/ethylene/HFP copolymer; a copolymer (ECTFE) containing an ethylene unit and a unit based on chlorotrifluoroethylene (CTFE) (CTFE unit); a copolymer containing a CTFE unit and a TFE unit; a copolymer (VT)containing a TFE unit and a unit based on vinylidene fluoride (VdF) (VdF unit); a copolymer (VTC) containing a TFE unit, a VdF unit, and a CTFE unit; and a copolymer containing a TFE unit, an HFP unit, and a VdF unit.

Among these, the F polymer is preferably one or more copolymers containing TFE units and one or more units selected from the group consisting of PAVE units, HFP units, units based on fluoroalkylethylene (FAE) (FAE units), and ethylene units.

More specifically, the F polymer is preferably a copolymer [ETFE] containing TFE units and ethylene units, a copolymer [FEP] containing TFE units and HFP units, or a copolymer [PFA] containing TFE units and PAVE units, and more preferably ETFE. These copolymers may further contain a unit based on another comonomer.

PAVE is preferably CF₂=CFOCF₃, CF₂=CFOCF₂CF₃, or CF₂=CFOCF₂CF₂CF₃ (hereinafter, also referred to as "PPVE"), and more preferably PPVE.

FAE is prerefably CH₂=CH(CF₂)₂F, CH₂=CH(CF₂)₃F, CH₂=CH(CF₂)₄F, CH₂=CF(CF₂)₃H, or CH₂=CF(CF₂)₄H.

ETFE preferably contains, with respect to all units, a TFE unit and an ethylene unit in this order, in amounts of from 35 to 65% by mol and from 35 to 65% by mol, respectively. ETFE may further contain other units such as a PAVE unit, an HFP unit, and an FAE unit.

The F polymer has 50 or more carbonyl group-containing groups per 10⁶ carbon atoms in its main chain. The number of carbonyl group-containing groups in the F polymer is preferably 100 or more, and more preferably 200 or more, per 10⁶ carbon atoms in its main chain. The number of carbonyl group-containing groups in the F polymer is preferably 5,000 or less, and more preferably 3,000 or less, per 1 × 10⁶ carbon atoms in its main chain. The number of carbonyl group-containing groups in the F polymer can be quantified based on the composition of the polymer or by the method described in WO No. 2020/145133.

In a case in which the F polymer has a carbonyl group-containing group within the above-described range, the present film for a battery exterior body is excellent in adhesiveness to a soft metal layer, and the battery exterior body including the soft metal layer and a layer of the present film for a battery exterior body, which will be described later, is excellent in barrier properties and in moldability such as slip properties of the surface and drawability. In addition, it is easy to obtain the present film for a battery exterior body that is excellent in mechanical properties, heat resistance, and surface properties, and has a small dimensional change rate.

The carbonyl group-containing group is preferably a carboxyl group, an alkoxycarbonyl group, an amide group, an isocyanate group, a carbamate group (-OC(O)NH₂), an acid anhydride residue group (-C(O)OC(O)-), an imide residue group (-C(O)NHC(O)-, or the like), a formyl group, a halogenoformyl group, a urethane group (-NHC(O)O-), a carbamoyl group (-C(O)-NH₂), a ureido group (-NH-C(O)-NH₂), an oxamoyl group (-NH-C(O)-C(O)-NH₂), or a carbonate group (-OC(O)O-), and more preferably an acid anhydride residue group.

The carbonyl group-containing group may be contained in a unit based on a monomer in the F polymer or may be contained in a terminal group of the main chain of the F polymer. Examples of the latter embodiment include an F polymer having a carbonyl group-containing group as a terminal group derived from a polymerization initiator, a chain transfer agent, or the like.

The monomer having the carbonyl group-containing group is preferably itaconic anhydride, citraconic anhydride, or 5-norbornene-2,3-dicarboxylic anhydride (hereinafter, also referred to as "NAH"), and NAH is more preferred.

The F polymer is preferably a copolymer containing a TFE unit and an ethylene unit and having a carbonyl group-containing group. As such ETFE, a polymer can be mentioned that contains a TFE unit, an ethylene unit, and a unit based on a monomer having a carbonyl group-containing group and contains, with respect to all units, these units in this order in amounts of from 35 to 65% by mol, from 35 to 65% by mol, and from 0.01 to 5% by mol, respectively. Specific examples of such ETFE include a polymer described in WO 2006/134764 and JP-A 2012-106494.

A MFR of the F polymer contained in the present film for a battery exterior body is preferably higher than 10 g/10 min and 60 g/10 min or less, and more preferably from 15 g/10 min to 50 g/10 min. In a case in which the MFR is within the above-described range, the present film for a battery exterior body maintains its flexibility while easily exhibiting properties inherent to the F polymer, such as the chemical resistance and heat resistance.

In the present film for a battery exterior body, F polymer may be used singly, or two or more types thereof may be used in combination.

The F polymer may contain another component other than the F polymer, within a range that does not impair the effects of the present invention. Examples of the other component include a known resin additive and another heat-meltable heat-resistant resin other than the F polymer, such as a polyimide and a polyether ether ketone.

The present film for a battery exterior body preferably has an oxygen element ratio of less than 1.5 atomic%, and more preferably 1.0 atomic% or less, when a surface condition of one or both sides of the film is measured using a scanning X-ray photoelectron spectroscopy analyzer (XPS/ESCA) after heat treatment at 180°C for 3 minutes. The oxygen element ratio is preferably 0.1 atomic% or more.

In this case, chemical resistance and gas barrier properties of the present film for a battery exterior body are likely to be improved. In addition, even when such an oxygen element ratio is within the above-described range, the F polymer contained in the present film for a battery exterior body tends to have excellent surface properties and excellent adhesiveness to a soft metal layer.

Such an oxygen element ratio is a value obtained by placing a test piece for XPS/ESCA measurement, prepared from the present film for a battery exterior body, on a metal tray, performing heat treatment at 180°C for 3 minutes in an electric furnace under an air atmosphere, and then measuring a surface condition of one or both sides of the test piece using XPS/ESCA.

The present film for a battery exterior body preferably has an absolute value of a dimensional change rate before and after heat treatment of 2% or less, and more preferably 1.8% or less, which is measured by cooling to 25°C after heat treatment at 180°C for 10 minutes. The dimensional change rate is a value calculated from a change amount in a gauge length before and after heat treatment, the gauge length being obtained by cutting out a 300 mm-square test piece from the present film for a battery exterior body, placing a gauge mark at an interval of 180 mm, performing heat treatment at 180°C for 10 minutes in an electric furnace under an air atmosphere without applying a load, and then measuring, after cooling to 25°C, a gauge length in each of a longitudinal direction and a transverse direction of the test piece.

The present film for a battery exterior body can be formed, for example, by melt-extruding the F polymer using an extruder equipped with a T-die. Melt extrusion of the F polymer may be carried out continuously after melt-kneading the F polymer or may be carried out while melt-kneading the F polymer in the extruder. In addition, after melt extrusion, the film may be uniaxially or biaxially stretched or may not be stretched. Conditions for melt extrusion are preferably set to a temperature higher than the melting point of the F polymer by 20°C or more. A thickness of the film for a battery exterior body can be controlled by appropriately adjusting a clearance of the T-die, a take-up speed, an application amount of the F polymer or the like.

The present film for a battery exterior body can also be obtained by preparing a solution or dispersion containing the F polymer, applying it onto a substrate, heating it, and then separating the film from the substrate.

The thickness of the film for a battery exterior body is 10 µm or more, and is preferably 60 µm or less, and more preferably 50 µm or less, from the viewpoint of ensuring excellent moldability such as slip properties and drawability of the battery exterior body in the present invention, while maintaining properties such as chemical resistance and heat resistance. In addition, a total thickness of the battery exterior body in the present invention described later, which includes a soft metal layer and a layer of the present film for a battery exterior body is preferably from 50 µm to 200 µm, more preferably from 60 µm to 150 µm, and even more preferably from 70 µm to 125 µm. By the above-described mechanism of action, in a case in which a thickness of the present film for a battery exterior body is within the above-described range, the battery exterior body tends to be more excellent in chemical resistance and heat resistance, and also tends to be excellent in moldability such as slip properties and drawability in synergy with the soft metal layer.

The present film for a battery exterior body is excellent in barrier properties and heat resistance and can be suitably used for an exterior body for various batteries. Examples of the battery include an all-solid-state battery such as a sulfide-type all-solid-state battery, an oxide-type all-solid-state battery, or an all-resin battery; a semi-solid battery such as a gel polymer-type semi-solid battery, a clay-type semi-solid battery, a liquid-addition-type semi-solid battery, or a condensed-state battery; a lithium-ion battery such as a lithium-sulfur battery (Li-S battery), a lithium manganese iron phosphate battery (LMFP battery), or a lithium iron phosphate lithium-ion battery (for example, an "M3P battery" manufactured by Contemporary Amperex Technology Co., Limited (CATL)); and a solar cell.

The present film for a battery exterior body is also applicable to a member such as a tab lead or a separator in each of the above-described various batteries.

The present invention also relates to a battery exterior body (hereinafter, also referred to as "the present battery exterior body") including a soft metal layer and a layer of the present film for a battery exterior body.

Since the present battery exterior body includes the soft metal layer, the present battery exterior body is excellent in barrier properties. Further, by including the layer of the present film for a battery exterior body, which is excellent in adhesiveness to the soft metal layer, the present battery exterior body is excellent in heat resistance, and peeling of a layer containing a fluororesin from the metal layer is suppressed even when the laminate is heated.

Since the present battery exterior body has such characteristics, in a case in which the present battery exterior body is used as an exterior body for various secondary batteries, the present battery exterior body tends to be excellent in barrier properties and heat resistance even when charging and discharging are repeated, and tends to maintain battery characteristics such as charging and discharging capacity.

In the present battery exterior body, the soft metal layer may be a foil-shaped or plate-shaped soft metal, and a soft metal foil is more preferred.

Examples of the soft metal constituting the soft metal support include at least one selected from the group consisting of aluminum, stainless steel, and copper. From the viewpoint of further improving mechanical properties, barrier properties, and chemical resistance (corrosion resistance) of the present film for a battery exterior body, aluminum is preferred as the soft metal. Aluminum may be a simple substance metal or may be an alloy. In a case in which the aluminum is an alloy, an aluminum alloy having an aluminum content of 80% by mass or more is preferred. In other words, the soft metal support is more preferably an aluminum foil.

In the battery exterior body, an adhesive strength between the soft metal layer and the layer of the present film for a battery exterior body is preferably 100 N/m or greater. An upper limit of the adhesive strength is 1000 N/m. In a case in which the adhesive strength is within the above-described range, heat resistance of the present battery exterior body and moldability such as slip properties of the surface and drawability are likely to be further improved.

The adhesive strength between the soft metal layer and the layer of the present film for a battery exterior body is a value obtained by measuring peel strength described in Examples, which will be described later.

The soft metal layer preferably has a water vapor transmission rate of 1 g/m²·day or less, more preferably 0.1 g/m²·day or less, and even more preferably 0.01 g/m²·day or less. The water vapor transmission rate is measured using a differential pressure -type gas and water vapor transmission rate tester (GC method) at 40°C and RH 90% in accordance with JIS K7129-1:2019.

The soft metal layer preferably has an oxygen transmission rate of 1 g ml/m² day atm or less, more preferably 0.1 g ml/m² day atm or less, and even more preferably 0.01 g ml/m² day atm or less. The oxygen transmission rate is measured using a differential pressure-type gas and water vapor transmission rate tester (GC method) at 23°C in accordance with JIS K7126-2:2006.

The soft metal layer may have a surface that has been subjected to a surface treatment.

The soft metal layer preferably has a thickness of from 10 µm to 60 µm , and more preferably from 15 µm to 50 µm, from the viewpoint of enhancing the mechanical properties of the present battery exterior body and further improving barrier properties, chemical resistance (corrosion resistance), and moldability such as slip properties and drawability.

In addition, from the viewpoint of increasing chemical resistance and heat resistance of the present battery exterior body and further improving moldability such as slip properties and drawability, the thickness of the soft metal layer is preferably in a range of higher than 25% and 200% or less of the thickness of the layer of the present film for a battery exterior body, and it is more preferred that the layer of the present film for a battery exterior body is thicker than the soft metal layer. The thickness of the soft metal layer is more preferably from 40% to 150% of the thickness of the layer of the present film for a battery exterior body. In a case in which the present battery exterior body includes a plurality of layers of the present film for a battery exterior body, a total thickness thereof is regarded as the thickness of the layer of the present film for a battery exterior body.

The present battery exterior body may further have a resin film layer (hereinafter, also referred to as a "resin film layer A") made of at least one resin selected from the group consisting of polyethylene, polypropylene, polyimide, polyamide, liquid crystal polymer, polyphenylene sulfide, polyethylene terephthalate, polybutylene terephthalate, cycloolefin polymer, polystyrene, epoxy resin, bismaleimide, polyphenylene oxide, polyphenylene ether, and polybutadiene.

The present battery exterior body may further have a resin film layer made of a heat-meltable tetrafluoroethylene-type polymer having no carbonyl group-containing group (hereinafter, also referred to as a "resin film layer B"). Examples of the heat-meltable tetrafluoroethylene-type polymer having no carbonyl group-containing group include a copolymer (ETFE) having an ethylene unit and a TFE unit, in which a content of a carbonyl group-containing group is less than 50 per 10^6 carbon atoms in its main chain; a copolymer (PFA) containing a TFE unit and a PAVE unit; a polymer (PVDF) having a vinylidene fluoride unit; and a polymer (PVF) having a vinyl fluoride unit.

In a case in which the present battery exterior body has either one or both of the above-described resin film layer A and resin film layer B, a thickness of resin film layer A and resin film layer B is not limited as long as the effects of the present invention are not impaired, and is preferably in a range of from 1 to 50 µm.

The above-described resin film layer A and resin film layer B may further contain another component such as various additives and an inorganic filler, within a range that does not impair the effects of the present invention. In addition, each resin film layer may be in contact with the soft metal layer via an adhesive layer.

The present battery exterior body preferably has a configuration in which a layer of the present film for a battery exterior body is in contact with one surface of the soft metal layer.

The present battery exterior body more preferably has a configuration including, in this order, a layer of the present film for a battery exterior body, the soft metal layer, and a layer of the present film for a battery exterior body, and further preferably has a configuration in which the layers of the present film for a battery exterior body are in contact with both surfaces of the soft metal layer. In this case, the layers of the present film for a battery exterior body that are in contact with both surfaces of the soft metal layer may be a layer of the present film for a battery exterior body containing the same type of F polymer, or may be two types of layers of the present film for a battery exterior body containing different F polymers.

In a case in which the present battery exterior body further has either one or both of the above-described resin film layer A and resin film layer B, the resin film layer preferably has a configuration in which the resin film layer is in contact with one surface of the soft metal layer, or a configuration in which the resin film layer is in contact with a surface, opposite to the soft metal layer, of the layer of the present film for a battery exterior body that is in contact with one or both surfaces of the soft metal layer. In a case in which the layers of the present film for a battery exterior body are in contact with both surfaces of the soft metal layer, the resin film layer may have a configuration in which the resin film layer is present outside one of the layers of the present film for a battery exterior body that is in contact with the soft metal layer, or a configuration in which the resin film layer is present outside both of the layers of the present film for a battery exterior body. In a case in which there are a plurality of resin film layers, types thereof may be the same or different.

The present battery exterior body more preferably has a configuration in which a layer of the present film for a battery exterior body is in contact with one surface of the soft metal layer, and a resin film layer (resin film layer A or resin film layer B) is in contact with another surface of the soft metal layer. In this case, from the viewpoint of allowing chemical resistance, heat resistance, and barrier properties of the present battery exterior body to be maximally exhibited, it is preferred to configure the battery such that a side of the layer of the present film for a battery exterior body of the present battery exterior body is located at a position that contacts an electrolytic solution.

The present battery exterior body can be obtained, for example, by a method (thermal lamination method) in which the soft metal layer and the present film for a battery exterior body, and optionally a resin film layer, are hot-pressed.

In addition, the present battery exterior body may be obtained by a method in which a laminate made of the present film for a battery exterior body and a resin film (resin film A or resin film B) is produced in advance by a thermal lamination method or the like, and a soft metal layer is hot-pressed onto a surface of the laminate on a side of the present film for a battery exterior body.

The present battery exterior body can be used without particular limitation for a purpose of enclosing a battery, and may be, for example, a bag-shaped battery exterior body (hereinafter, also referred to as a "battery bag").

A battery bag using the present battery exterior body can be obtained, for example, by heat-sealing a part of a peripheral edge of one or more sheets of the present battery exterior body to form a bag shape.

Examples of a form of the battery bag include a three-side-sealed bag in which one sheet of the present battery exterior body is folded back in the middle and overlapped, and first layers on peripheral edges of three overlapped sides are heat-sealed to each other; and a four-side-sealed bag in which two sheets of the present battery exterior body are overlapped, and first layers on peripheral edges of four overlapped sides are heat-sealed to each other. Such a battery bag is excellent in barrier properties and heat resistance, and occurrence of interfacial peeling between a seal portion and each layer of the battery bag is suppressed even under a high-temperature environment.

These battery bags can be used for the above-described various batteries, and are applicable to battery cells having various shapes such as a laminate type, a pouch type, a cylindrical type, and a prismatic type.

FIG. 1 shows an example of an all-solid-state battery in which an exterior of an all-solid-state battery cell is formed by the present battery exterior body. An all-solid-state battery 40 has an all-solid-state battery cell 42 and the present battery exterior body 10 that encloses the all-solid-state battery cell 42. A bag 30 is a three-side-sealed bag obtained by folding back the present battery exterior body 10 in the middle and overlapping it, and heat-sealing peripheral edges of three overlapped sides to form seal portions 32 on three sides. A positive electrode terminal 44 and a negative electrode terminal 46 protruding from an exterior body formed of the present battery exterior body 10 are sealed in a state of being sandwiched between two sheets of the present battery exterior body 10.

Since an all-solid-state battery having such a configuration is enclosed by the present battery exterior body, the all-solid-state battery is excellent in barrier properties and heat resistance, and peeling or the like is unlikely to occur at a seal portion of a laminate as an exterior body and at an interface between layers of the laminate when exposed to a high temperature. Therefore, a decrease in charging and discharging capacity when exposed to a high temperature is suppressed as compared with a conventional case.

The present invention also relates to a secondary battery having the present battery exterior body and an electrolyte, in which a layer of the present film for a battery exterior body in the present battery exterior body is provided at a position that contacts an electrolytic solution when the battery is assembled. By employing such a configuration, the battery exterior body is excellent in chemical resistance to the electrolytic solution and in heat resistance, and is also excellent in barrier properties.

Examples of the secondary battery include the above-described various batteries, and the electrolyte may be a liquid or a solid.

As described above, the present film for a battery exterior body and a battery exterior body formed from the present film for a battery exterior body have been described; however, the present invention is not limited to the configurations of the above-described embodiments.

For example, in the configurations of the above-described embodiments, the battery exterior body formed from the present film for a battery exterior body may have any other configuration added thereto, or may be replaced with any configuration that exhibits a similar function.

### Examples

Hereinafter, the present invention will be described in detail by way of Examples; however, the present invention is not limited thereto.

### Preparation of Each Component

### [Film of Heat-meltable Tetrafluoroethylene-type Polymer (F Polymer)]

F Film 1: A film of ETFE having, in this order, a TFE unit, an ethylene unit, a unit based on CH₂=CH(CF₂)₂F, and an NAH unit in amounts of 58.0% by mol, 38.6% by mol, 3.1% by mol, and 0.3% by mol, respectively, and having 3000 carbonyl group-containing groups per 10⁶ carbon atoms in its main chain (fluorine content: 64% by mass; MFR: 27.0 g/10 min; melting point: 237°C) (thickness: 25 µm; oxygen element ratio: 0.8 atomic%).

F Film 2: A film of PFA having, in this order, a TFE unit, a PPVE unit, and an NAH unit in amounts of 97.9% by mol, 2.0% by mol, and 0.1% by mol, respectively, and having 1000 carbonyl group-containing groups per 1×10⁶ carbon atoms in its main chain (fluorine content: 75% by mass; MFR: 11.0 g/10 min; melting temperature: 300°C) (thickness: 25 µm; oxygen element ratio: 0.5 atomic%).

F Film 3: A film of PFA containing a TFE unit and a PPVE unit and having less than 10 carbonyl group-containing groups per 1×10⁶ carbon atoms in its main chain (fluorine content: 75% by mass; melting temperature: 305°C) (thickness: 25 µm; oxygen element ratio: less than 0.1 atomic%).

F Film 4: An F film obtained by continuously passing F Film 3 along a roll-shaped ground electrode while flowing a nitrogen gas containing 0.50% by volume of vinyl acetate in the vicinity of a discharge electrode of a corona discharge device and the roll-shaped ground electrode, and performing a corona discharge treatment at a discharge amount of 1000 W·min/m² or greater (thickness: 25 µm; oxygen element ratio: 10 atomic%).

F Film 5: A film of PVDF, which is a homopolymer of vinylidene fluoride (fluorine content: 59% by mass) (thickness: 25 µm).

It should be noted that F Film 1 and F Film 2 correspond to the film for a battery exterior body in the present invention.

### [Soft Metal Layer]

Metal Layer 1: Aluminum alloy foil (aluminum alloy foil based on JIS H 4160:1994; alloy number 8079; thickness: 40 µm; length: 30 cm; width: 30 cm).

### 2. Production of Battery Exterior Body

### Example 1

F Film 1 was laminated on both surfaces of Metal Layer 1, and release films (a polyimide film "Kapton (registered trademark) 200H/V" manufactured by Toray-DuPont Co., Ltd.; thickness: 50 µm) were further laminated on outer sides of both surfaces thereof. After this laminate was pressed using a vacuum press device under conditions of 240°C for 15 minutes and 10 MPa, the laminate was taken out and left to stand for 5 minutes under an atmosphere of 25°C to be cooled. After cooling, the release films on both surfaces were peeled off to obtain Battery Exterior Body 1.

### Example 2

F Film 2 was laminated on both surfaces of Metal Layer 1, and the same release films as in Example 1 were further laminated on outer sides of both surfaces thereof. After this laminate was pressed using a vacuum press device under conditions of 305°C for 15 minutes and 1 MPa, the laminate was taken out and left to stand for 5 minutes under an atmosphere of 25°C to be cooled. After cooling, the release films on both surfaces were peeled off to obtain Battery Exterior Body 2.

### Example 3

F Film 3 was laminated on both surfaces of Metal Layer 1, and the same release films as in Example 1 were further placed and laminated on outer sides of both surfaces thereof. After this laminate was pressed under the same conditions as in Example 2, the laminate was taken out and left to stand for 5 minutes under an atmosphere of 25°C to be cooled. After cooling, the release films on both surfaces were peeled off to obtain Battery Exterior Body 3.

### Example 4

F Film 4 was laminated on both surfaces of Metal Layer 1, and the same release films as in Example 1 were further placed and laminated on outer sides of both surfaces thereof. After this laminate was pressed under the same conditions as in Example 2, the laminate was taken out and left to stand for 5 minutes under an atmosphere of 25°C to be cooled. After cooling, the release films on both surfaces were peeled off to obtain Battery Exterior Body 4.

### Example 5

F Film 5 was laminated on both surfaces of Metal Layer 1, and the same release films as in Example 1 were further placed and laminated on outer sides of both surfaces thereof. After this laminate was pressed under the same conditions as in Example 1, the laminate was taken out and left to stand for 5 minutes under an atmosphere of 25°C to be cooled. After cooling, the release films on both surfaces were peeled off to obtain Battery Exterior Body 5.

### 3. Evaluation of Battery Exterior Body

### 3-1. Adhesiveness (Durability Against Hydrogen Sulfide Gas)

The battery exterior body produced in each Example was placed between an upper part and a lower part of a separable flask each having a vent port in an upper portion and a lower portion. Under an environment of 23±5°C, nitrogen gas was supplied at 50 mL/min to the vent port of the upper portion, and nitrogen gas having a hydrogen sulfide gas concentration of 20±5 ppm was supplied at 50 mL/min to the vent port of the lower portion, and the battery exterior body was left to stand for 48 hours.

Thereafter, the battery exterior body was taken out and cut into a width of 1 cm, and an interface between the layer of the film for a battery exterior body on a side that had been exposed to the nitrogen gas containing hydrogen sulfide and the aluminum layer was peeled from a position at one end in a longitudinal direction to a position 50 mm therefrom. Then, using a tensile tester, peeling was performed at 25°C at a tensile speed of 100 mm/min so as to be 90°. An average load from a measurement distance of from 20 mm to 80 mm was measured and defined as a peel strength (N/cm). With a peel strength of Battery Exterior Body 1 after exposure to the nitrogen gas containing hydrogen sulfide being defined as 100, adhesiveness was evaluated for battery exterior bodies 2 to 4 as follows: a relative value of the peel strength after exposure to hydrogen sulfide of 100 or more was evaluated as "o"; the relative value of the peel strength of 75 or more and less than 100 was evaluated as "△"; the relative value of the peel strength of less than 75 was evaluated as "×".

It should be noted that, for Battery Exterior Body 3, since a peel strength measured in the same manner using a tensile tester before exposure to the nitrogen gas containing hydrogen sulfide was within a range of "×" as the above-described relative value, adhesiveness evaluation was not performed.

### 3-2. Slip Properties and Drawability

For the battery exterior body used for evaluation in "3-1. Adhesiveness," deep drawing one-step forming was further performed using a straight forming die having a forming depth of 5 mm [made of carbon steel (only a punch R was chromium-plated); punch: 33.3 mm×53.9 mm; die: 80 mm×120 mm; corner R: 2 mm; punch R: 1.3 mm; die R: 1 mm] at a blank-holding actual pressure (calculated value) of 0.7 MPa, and whitening and the presence or absence of a crack in the formed product were visually observed.

A case in which neither whitening nor a crack was observed in the formed product was evaluated as "o", a case in which whitening was observed in the formed product was evaluated as " △", and a case in which a crack was observed in the formed product was evaluated as "×". It should be noted that, for Battery Exterior Body 5, since sufficient results were not obtained in the above-described adhesiveness evaluation, evaluation of slip properties and drawability was not performed.

The above evaluation results are shown in Table 1.

**[Table 1]**

| | Adhesiveness | Slip Properties and Drawability |
|---|---|---|
| Battery Exterior Body 1 | ○ | ○ |
| Battery Exterior Body 2 | ○ | △ |
| Battery Exterior Body 3 | Not Evaluated | Not Evaluated |
| Battery Exterior Body 4 | △ | × |
| Battery Exterior Body 5 | × | Not Evaluated |

The disclosures of Japanese Patent Applications Nos. 2023-120103, 2023-194606, and 2024-034259 are incorporated herein by reference in their entirety.

All documents, patent applications, and technical standards in this disclosure are incorporated herein by reference to the same extent as if each individual document, patent application, and technical standard were specifically and individually indicated to be incorporated by reference.

### [Explanation of Symbols]

10 Battery exterior body
30 Bag
32 Seal portion
40 All-solid-state battery
42 All-solid-state battery cell
44 Positive electrode terminal
46 Negative electrode terminal

## Claims

1. A film for a battery exterior body having a thickness of 10 µm or greater, comprising a heat-meltable tetrafluoroethylene-type polymer having 50 or more carbonyl group-containing groups per 10⁶ carbon atoms in its main chain and a fluorine content of from 60% by mass to 75% by mass.

2. The film for a battery exterior body according to claim 1, wherein the heat-meltable tetrafluoroethylene-type polymer has an MFR of from 10 g/10 min to 60 g/10 min.

3. The film for a battery exterior body according to claim 1, wherein the fluorine content is from 60% by mass to 68% by mass.

4. The film for battery exterior body according to claim 1, wherein the heat-meltable tetrafluoroethylene-type polymer is a copolymer comprising a tetrafluoroethylene unit and an ethylene unit.

5. The film for a battery exterior body according to claim 1, wherein a number of the carbonyl group-containing groups in the heat-meltable tetrafluoroethylene-type polymer is 200 or more per 10⁶ carbon atoms in its main chain.

6. The film for a battery exterior body according to claim 1, wherein an oxygen element ratio is less than 1.5 atomic % when a surface condition of one or both sides of the film is measured using a scanning X-ray photoelectron spectroscopy analyzer (XPS/ESCA) after heat treatment at 180°C for 3 minutes.

7. A battery exterior body comprising:
a soft metal layer; and
a layer of the film for a battery exterior body according to any one of claims 1 to 6.

8. The battery exterior body according to claim 7, wherein the layer of the film for a battery exterior body is thicker than the soft metal layer.

9. The battery exterior body according to claim 7, wherein the soft metal is aluminum.

10. The battery exterior body according to claim 7, comprising, in this order, the layer of the film for a battery exterior body, the soft metal layer, and the layer of the film for a battery exterior body.

11. The battery exterior body according to claim 7, further comprising a resin film layer made of at least one resin selected from the group consisting of a polyethylene, a polypropylene, a polyimide, a polyamide, a liquid crystal polymer, a polyphenylene sulfide, a polyethylene terephthalate, a polybutylene terephthalate, a cycloolefin polymer, a polystyrene, an epoxy resin, a bismaleimide, a polyphenylene oxide, a polyphenylene ether, and a polybutadiene.

12. The battery exterior body according to claim 7, further comprising a resin film layer made of a heat-meltable tetrafluoroethylene-type polymer having no carbonyl group-containing groups.

13. The battery exterior body according to claim 11 or 12, wherein the layer of the film for a battery exterior body is in contact with one surface of the soft metal layer, and the resin film layer is in contact with another surface of the soft metal layer.

14. The battery exterior body according to claim 7, wherein an adhesive strength between the soft metal layer and the layer of the film for a battery exterior body is 100 N/m or greater.

15. A secondary battery comprising:
the battery exterior body according to claim 12; and
an electrolyte,
wherein the layer of the film for a battery exterior body is provided at a position that contacts the electrolyte when the battery is assembled.
